# NEUE EUROPÄISCHE PATENTSCHRIFT

(11) **EP 2 837 757 B2**
(45) Veröffentlichungstag und Bekanntmachung des Hinweises auf die Entscheidung über den Einspruch: **03.06.2020**
(45) Hinweis auf die Patenterteilung: 12.07.2017
(21) Anmeldenummer: 14002678.2
(22) Anmeldetag: 31.07.2014
(51) Int. Cl.: E05B 47/00, H02J 7/34

(54) **Vorrichtung für eine Tür zur elektrischen Versorgung einer elektrischen Komponente**
Device for a door for electrical powering of an electrical component
Dispositif pour une porte destinée à l'alimentation électrique d'un composant électrique

(30) Priorität: 07.08.2013 DE 102013108526
(43) Veröffentlichungstag der Anmeldung: 18.02.2015
(73) Patentinhaber: dormakaba Deutschland GmbH, 58256 Ennepetal (DE)
(72) Erfinder: Böse, Felix, D-58256 Ennepetal (DE)
(74) Vertreter: Balder IP Law, S.L.

(56) Entgegenhaltungen:
- EP-A1- 1 160 399
- EP-A2- 1 852 605
- DE-A1-102007 032 534
- DE-U1-202008 017 350
- DE-U1-202010 006 954
- US-A1- 2006 244 427
- US-A1- 2010 060 231
- US-A1- 2012 169 453
- S.P. Wolsky ET AL: "The 12th international seminar on double layer capacitor", , 9. Dezember 2002 (2002-12-09), XP055180948, Gefunden im Internet: URL:http://www.nesscap.com/common/download .jsp?dir=support/papers&sfn=GDIKSHGLCYPPHF X.pdf&ofn=PERFORMANCE TESTING OF SELECTED COMMERCIAL ULTRACAPACITORS.pdf [gefunden am 2015-04-02]
- "Low Noise Constant Frequency Charging of Two Series Supercapacitors n Automatic Cell Balancing Prevents Capacitor Overvoltage During Charging n Programmable Charge Current (Up to 150mA)", , 31. Dezember 2008 (2008-12-31), XP055181026, Gefunden im Internet: URL:http://cds.linear.com/docs/en/datashee t/3225fb.pdf [gefunden am 2015-04-02]

## Beschreibung

Die Erfindung betrifft eine Vorrichtung für eine Tür zur elektrischen Versorgung einer elektrischen Komponente, gemäß dem Obergriff von Anspruch 1.

### Stand der Technik

Es ist bekannt, elektrische Komponenten zum Öffnen und Verschließen einer Tür zu nutzen. Die elektrische Komponente wird dabei im Normalbetrieb über eine Spannungsquelle betrieben. Aufgrund von Sicherheitsvorschriften bei einem Ausfall der elektrischen Spannung kann es vorgesehen sein, die elektrische Versorgung der elektrischen Komponente durch eine Energieeinheit sicherzustellen. Damit kann zumindest das Entriegeln der Tür durch die Energieeinheit gewährleistet werden, um eine Versperrung eines Fluchtweges zu verhindern. Nachteilig hat sich allerdings herausgestellt, dass die Energieeinheit in ihrer räumlich-körperlichen Ausdehnungen ausreichend groß sein muss, um eine Mindestkapazität aufweisen zu können, damit die elektrische Komponente zum Entriegeln der Tür betrieben werden kann. Das heißt, dass die räumlich-körperliche Ausdehnung der Energieeinheit im Wesentlichen zu der körperlich-räumlichen Ausdehnung der gesamten Vorrichtung beiträgt. DE 20 2010 006954 U1 offenbart ein mit Superkondensatoren versehenes Stromversorgungspufferbauteil. Das Stromversorgungspufferbauteil wird außerhalb eines Schlossgehäuses eines Schlosses, beispielsweise in einen Kabelkanal, in einen Hohlraum der Tür oder in einem Türrahmen integriert.

### Offenbarung der Erfindung

Es ist Aufgabe der vorliegenden Erfindung eine Vorrichtung für eine Tür zur elektrischen Versorgung einer elektrischen Komponente bereit zu stellen, wobei die Vorrichtung einfach und platzsparend aufgebaut ist. Zur Lösung dieser Aufgabe wird eine Vorrichtung mit dem Merkmal des Anspruches 1 vorgeschlagen, insbesondere mit den Merkmalen des jeweiligen kennzeichnenden Teils. In den abhängigen Ansprüchen sind bevorzugte Weiterbildungen ausgeführt.

Die Erfindung offenbart eine Vorrichtung für eine Tür zur elektrischen Versorgung einer elektrischen Komponente, wobei die elektrische Komponente durch eine Spannungsquelle zum Öffnen und Verschließen der Tür elektrisch betreibbar ist. Ein Energiespeicher ist durch eine an der Spannungsquelle abgreifbare elektrische Spannung ladbar, wobei bei einem Ausfall der elektrischen Spannungen die elektrische Komponente durch den Energiespeicher elektrisch betreibbar ist. Erfindungsgemäß ist vorgesehen, dass die Energie im Energiespeicher im Wesentlichen durch eine elektrostatische Energiespeicherung erfolgt, wobei der Energiespeicher mindestens eine Energiedichte von 1J/cm³ aufweist. Dabei ist 1 J=1 Ws. So kann die Leistung der elektrischen Komponente, welche z. B. ein elektrischer Türöffner sein kann, z. B. 1 Watt betragen. Bei einer Energiedichte von 1J/cm³ und einer angenommenen Größe des Energiespeichers von 1 cm³ könnte die elektrische Komponente im Idealfall 1 s betrieben werden. So kann in einer Tür, insbesondere in einem Türblatt mit einer Dicke von z. B. 2 cm die erfindungsgemäße Vorrichtung mit dem Energiespeicher mit einer Baugröße von 1 cm³ angeordnet werden. Die Anordnung der erfindungsgemäßen Vorrichtung kann dabei auch an oder in einem Schlossgehäuse erfolgen. Die Anordnung der erfindungsgemäßen Vorrichtung mit dem Energiespeicher kann dementsprechend ohne Schaffung eines zusätzlichen Bauraumes in der Tür erfolgen. Ein Elektrolytkondensator, der ebenfalls im Wesentlichen durch eine elektrostatische Energiespeicherung die Energie speichert weist z. B. bei einem Volumen von 22 cm³ eine Energiedichte von 0,125 J/cm³ auf. Dies bedeutet, dass zum Betrieb der elektrischen Komponente über 1 s mit einer Leistung von 1 W durch einen Elektrolytkondensator, das Volumen des Elektrolytkondensators 176 cm³ betragen muss. Dies entspricht einer Seitenlänge des Elektrolytkondensators von ca. 5,6 cm in der Annahme, dass der Elektrolytkondensator würfelförmig ausgestaltet ist.

In einer bevorzugten Weiterbildung ist es vorgesehen, dass der Energiespeicher bevorzugt eine Energiedichte von mindestens 5J/cm³ aufweist, besonders bevorzugt eine Energiedichte von mindestens 8 J/cm³ aufweist. Je größer die Energiedichte, desto länger ist eine Betriebsdauer der elektrischen Komponente mit einer bestimmten Leistung. So kann die Leistung der elektrischen Komponente, welche z. B. ein elektrischer Türöffner oder ein Hubmagnet sein kann, z. B. 5 Watt betragen. Bei einer Energiedichte von 5J/cm³ und einer angenommenen Größe des Energiespeichers von 1 cm³ könnte die elektrische Komponente im Idealfall 1 s betrieben werden. Je höher die Energiedichte der elektrischen Komponente ist, desto länger kann auch der Betrieb der elektrischen Komponente durch den Energiespeicher erfolgen. Dementsprechend kann mit einem Energiespeicher von 8J/cm³ eine elektrische Komponente mit einer Leistung von 1 Watt 8s betrieben werden. Dadurch kann wirkungsvoll eine Entriegelung der Tür durch die elektrische Komponente erfolgen.

Weiterhin ist es vorteilhaft, dass der Energiespeicher ein Superkondensator ist. Ein Superkondensator kann dabei ein Doppelschichtkondensator, ein Pseudokondensator oder ein Hybridkondensator sein. Auch ist eine Kombination aus Doppelschichtkondensator, Pseudokondensator und Hybridkondensator denkbar. Der Superkondensator, insbesondere der Doppelschichtkondensator zeichnet sich dadurch aus, dass die Energiedichte bei gleichem Volumen verglichen mit einem Elektrolytkondensator bis zu 60 mal größer ist. Zudem unterliegt ein Superkondensator gegenüber einem Akkumulator nahezu keiner kalendarischen Alterung. Auch hängen die Verfügbarkeit und der Betrieb eines Superkondensators nahezu nicht von den Lade- und Entladezyklen ab. Der Einsatz eines Superkondensators anstatt eines z. B. herkömmlichen Elektrolytkondensators ermöglicht somit eine platzsparende Bauweise der gesamten Vorrichtung, wobei sich die Vorrichtung an der Tür, insbesondere in der Tür, derart anordnen lässt, wobei die räumlich-körperliche Ausdehnung der Tür, insbesondere einer Fluchttür für Menschen, nicht wesentlich, insbesondere nicht von der räumlich-körperlichen Ausdehnung der Vorrichtung abhängt. Erfindungsgemäß ist vorgesehen, dass ein Abwärtswandler die elektrische Spannung in eine niedrigere Spannung umwandelt, wobei durch die niedrigere Spannung der Energiespeicher ladbar ist. Eine Nennspannung des Energiespeichers kann weit unterhalb der abgreifbaren elektrischen Spannung der Energie der Spannungsquelle liegen, so dass der Abwärtswandler die elektrische Spannung auf die Nennspannung umwandeln kann. In der Industrie wird häufig z. B. eine Gleichspannung von 24 Volt eingesetzt. Die Nennspannung eines Superkondensators als Doppelschichtkondensator kann dabei 2,5 Volt betragen. Um einer Zerstörung des Superkondensators entgegenzuwirken, kann über den Abwärtswandler die höhere abgreifbare Spannung auf die niedrigere Nennspannung umgewandelt werden.

Zudem ist es vorteilhaft, dass an dem Energiespeicher eine Konstantstromquelle elektrisch angeordnet ist. Die Konstanstromquelle kann zur Begrenzung eines Ladestroms während der Ladung des Energiespeichers genutzt werden. Zudem kann eine Überlastung des Abwärtswandlers durch die Konstantstromquelle vermieden werden. Außerdem wird ein korrekter Betrieb zur Ladung des Energiespeichers gewährleistet.

Ferner ist es denkbar, dass wenigstens zwei Energiespeicher in Reihe geschaltet sind. Durch Schaltung von Energiespeichern in Reihe kann die Spannung durch die in Reihe geschalteten Energiespeicher erhöht werden. Im Falle, dass z. B. ein Energiespeicher 2,5 Volt Nennspannung aufweist sind in der Reihenschaltung von zwei Energiespeichern mit einer Nennspannung von 2,5 Volt 5 Volt durch die Reihenspannung der zwei Energiespeicher erreichbar. Auch ist es denkbar, dass eine Parallelschaltung von Energiespeichern erfolgen kann, wodurch sich die Kapazität durch die zwei in Parallelschaltung geschalteten Energiespeicher erhöht. Weiterhin kann eine Kombination aus einer Parallel- und Reihenschaltung von Energiespeichern erfolgen. Durch die Erhöhung der Spannung durch die in Reihe geschalteten Energiespeicher kann dementsprechend die elektrische Leistung durch die in Reihe geschalteten Energiespeicher erhöht werden. Dies gilt ebenfalls für eine Parallelschaltung, wobei sich die elektrische Leistung aus dem Produkt von Spannung mal Strom bestimmt. Erfindungsgemäß ist vorgesehen, dass durch einen Aufwärtsregler eine Erhöhung der niedrigeren Spannung durch den Aufwärtsregler auf eine erste Ausgangsspannung erfolgt. Durch den Aufwärtsregler kann eine Verdoppelung der niedrigen Spannung erfolgen. Dabei bietet der Aufwärtsregler einen guten Wirkungsgrad mit einer einfachen Induktivität. Zudem können höhere Spannungen mit einem guten Wirkungsgrad mittels eines Übertragers erfolgen. Der Übertrager kann dabei ein Transformator sein.

Ebenfalls ist es erfindungsgemäß dass eine Erhöhung der ersten Ausgangsspannung durch eine Kaskadeneinheit auf eine zweite Ausgangsspannung erfolgt. Dabei kann die Kaskadeneinheit eine Villardkaskade sein. Der Platzbedarf einer Villardkaskade ist dabei gegenüber einem Übertrager, insbesondere einem Transformator gering, da lediglich Dioden und Kondensatoren für den Aufbau der Villardkaskade zum Einsatz kommen. Dabei kann eine Eingangsspannung der Villardkaskade in eine nahezu beliebig hohe Ausgangsspannung umgewandelt werden. Je nach Anzahl von Dioden und Kondensatoren, die in der Villardkaskade zum Einsatz kommen, kann eine beliebig hohe zweite Ausgangsspannung erzeugt werden. Die Villardkaskade wandelt eine zugeführte Wechselspannung in eine hohe Gleichspannung um, wobei die Höhe der Gleichspannung sich nach der Anzahl der genutzten Dioden und Kondensatoren innerhalb der Schaltung der Villardkaskade bestimmt.

In einer bevorzugten Weiterbildung ist es vorgesehen, dass die Ladung der in Reihe geschalteten Energiespeicher durch eine passive Symmetrierschaltung erfolgt. Dabei kann die Symmetrierschaltung mit Widerständen aufgebaut sein. So können bei einem Einsatz von zwei Energiespeichern zwei Widerstände in Reihe geschaltet sein und durch die Reihenschaltung mit der passiven Symmetrierung die Ladung der Energiespeicher permanent erfolgen. Vorteilhafterweise kann bei einem Spannungsausfall die elektrische Versorgung aus den Energiespeichern direkt erfolgen. Eine Symmetrierschaltung mit zwei Energiespeichern kann dementsprechend zwei in Reihe geschaltete Widerstände aufweisen, wobei an jedem Widerstand ein Energiespeicher parallel geschaltet ist. Im Falle, dass die Energiespeicher die gleiche Nennspannung aufweisen, ist es vorteilhaft, dass die Widerstände gleiche Widerstandswerte aufweisen.

Vorteilhaft ist es ebenfalls, dass eine Schalteinheit an dem Energiespeicher angeordnet ist, wobei durch die Schalteinheit elektrische Energie des Energiespeichers an die elektrische Komponente übertragbar ist. Die Schalteinheit kann dabei ein Transistor sein, wobei eine Basis des Transistors an die abgreifbare elektrische Spannung der Spannungsquelle elektrisch angeordnet sein kann. Bei einem Ausfall der elektrischen Spannung ändert der Transistor einen Schaltzustand, wodurch die elektrische Energie des Energiespeichers an die elektrische Komponente übertragbar ist. Die Schalteinheit kann auch ein Relais sein, wobei das Relais mit einem Eingang an die abgreifbare elektrische Spannung elektrisch angeordnet sein kann. Bei einem Ausfall der elektrischen Spannung kann ebenfalls ein Schaltzustand des Relais sich ändern. Der Schaltzustand der elektrischen Komponente kann dabei ein Schließen oder ein Öffnen eines Schalters sein.

Optional ist es denkbar, dass die elektrische Komponente ein elektrischer Türöffner ist. Durch den elektrischen Türöffner kann dabei ein Öffnen und ein Verschließen der Tür erfolgen. Der elektrische Türöffner kann eine motorisch betriebene Falle oder Riegel sein. Die Falle kann in einer Schließposition zum Verschließen der Tür aus einem Schlossgehäuse hervorstehen und in einer Öffnungsposition in das Schlossgehäuse zur Öffnung der Tür eingeschoben sein. Die Falle kann dabei über eine Schließmechanik verfügen, wobei durch die Schließmechanik die Bewegung der Falle motorisch antreibbar ist. Auch kann ein Hubmagnet zur Bewegung der Falle genutzt werden. Dabei ist es denkbar, dass die Falle in einer Öffnung des Hubmagneten angeordnet ist, wobei die Falle aus der Öffnung des Hubmagneten bewegbar ist. Bei einer Anlegung einer Spannung an dem Hubmagneten kann dabei die Falle in die Öffnung bewegt werden.

Vorteilhaft ist es ebenfalls, dass der Abwärtswandler und/oder der Energiespeicher und/oder der Aufwärtswandler und/oder die Kaskadeneinheit auf einer Platine angeordnet sind, insbesondere auf einer Fläche der Platine in SMD-Technik angeordnet sind. Die Platine kann dabei ein Lochraster aufweisen, das für die Aufnahme von elektrischen Kontaktelementen des Abwärtswandlers und/oder der Energieeinheit und/oder des Aufwärtswandlers und/oder der Kaskadeneinheit dienen kann. Die Verdrahtung des Abwärtswandlers, des Energiespeichers, des Aufwärtswandlers und der Kaskadeneinheit kann dann über Leiterbahnen zu den einzelnen Kontaktelementen erfolgen. Die Leiterbahnen können auf einer kupferkaschierten Platine über ein Ätzverfahren ausgebildet werden. Die Platine kann dabei in einem Gehäuse angeordnet werden, wobei das Gehäuse wasserdicht ausgestaltet sein kann. Die Platine kann auch in einem Schlossgehäuse angeordnet sein, so dass das Schlossgehäuse mit der elektrischen Komponente und der Platine als eine Baueinheit ausgebildet sein kann. Das Schlossgehäuse kann dazu Anschlusselemente aufweisen, wobei an den Anschlusselementen eine abgreifbare elektrische Spannung einer Spannungsquelle angeordnet sein kann. Die Anordnung des Abwärtswandlers und/oder des Energiespeichers und/oder des Aufwärtswandlers und/oder der Kaskadeneinheit auf einer Fläche der Platine SMD-Technik bietet den Vorteil, dass eine Seite der Platine frei von Bauelementen ist. Dadurch kann die Platine auf der Seite, die frei von Bauelementen ist, über ein Klebverfahren in einem inneren des Schlossgehäuses oder der Tür angeordnet werden. Zudem bietet die SMD-Technik den Vorteil gegenüber herkömmlichen Bauelementen, dass diese in miniaturisierter Form ausgebildet sein können.

Die Aufgabe kann ebenfalls durch ein Verfahren zur elektrischen Versorgung einer elektrischen Komponente für eine Tür gelöst werden, wobei die elektrische Komponente durch eine Spannungsquelle zum Öffnen und zum Verschließen der Tür elektrisch betrieben wird und ein Energiespeicher durch eine an der Spannungsquelle abgreifbare elektrische Spannung geladen wird, wobei bei einem Ausfall der elektrischen Spannung die elektrische Komponente durch den Energiespeicher elektrisch betrieben wird. Es ist dabei vorgesehen, dass der Energiespeicher ein Superkondensator ist.

Besonders vorteilhaft ist es, dass an dem Energiespeicher eine Schalteinheit angeordnet ist und dass bei einem Ausfall der elektrischen Spannung durch eine Änderung eines Schaltzustandes der Schalteinheit eine Energieabgabe der in dem Energiespeicher geladenen Energie an die elektrische Komponente bewirkt wird. Die Schalteinheit kann dabei einen Transistor oder eine Relais sein. Ein Schaltzustand kann dabei eine geöffnete Schalterstellung sein oder eine geschlossene Schalterstellung sein. Durch den Einsatz eines Transistors als Schalteinheit kann eine schnelle und gesicherte Abgabe der Energie durch die Energieeinheiten an die elektrische Komponente durch eine schnelle Umschaltung von einem ersten Schaltzustand zu einem zweiten Schaltzustand erfolgen. Zudem ist die Wahl eines Transistors, der auch ein Feldeffekttransistor sein kann, von Vorteil, da dieser in der SMD-Technik auf einer Platine angeordnet sein kann. Die Wahl eines Transistors oder eines Feldeffekttransistors in der SMD-Technik bietet den Vorteil, dass ein Aufbau der Vorrichtung in einer bauraumoptimierten Weise erfolgen kann. Erfindungsgemäß ist vorgesehen, dass die abgreifbare Spannung der Spannungsquelle durch einen Abwärtsregler auf eine niedrigere Spannung als die abgreifbare Spannung reduziert wird, wobei durch die niedrigere Spannung der Energiespeicher geladen wird. Die Nutzung eines Abwärtswandlers bietet den Vorteil, dass bei einer hohen abgreifbaren Spannung auch Energiespeicher mit einer sehr niedrigen Nennspannung eingesetzt werden können. Da der Energiespeicher ein Superkondensator ist, beträgt z. B. für einen Doppelschichtkondensator eine Nennspannung ca. 2,5 Volt. Bei einer abgreifbaren Spannung von 24 Volt oder 30 Volt kann durch den Abwärtswandler die abgreifbare Spannung auf die Nennspannung von 2,5 Volt reduziert werden. Dabei können die Energiespeicher in Reihe angeordnet werden, wobei z. B. zwei Energiespeicher mit einer Nennspannung von 2,5 Volt eine Spannung von 5 Volt brauchen. Die 5 Volt können über den Abwärtswandler zur Verfügung gestellt werden, wobei die Energiespeicher, die in Reihe geschaltet sind, über eine Symmetrierschaltung, insbesondere durch eine Verwendung von Widerständen geladen werden können. Bei der Nutzung von zwei Energiespeichern mit der gleichen Nennspannung bietet sich daher die Ausbildung von zwei Widerständen in Reihe mit gleichen Widerstandswerten an. Die in Reihe geschalteten Widerstände mit den gleichen Widerstandswerten bilden einen Spannungsteiler, wobei über jeden Widerstand die gleiche Spannung abfällt. Bei einem Anlegen von 5 Volt an die in Reihe geschalteten Widerstände fällt dementsprechend eine Spannung von 2,5 Volt pro Widerstand ab. An diesen Widerständen können dann parallel jeweils ein Energiespeicher mit einer Nennspannung von 2,5 Volt angeordnet werden.

Erfindungsgemäß kann es vorgesehen sein, dass die niedrige Spannung auf eine höhere Spannung, insbesondere im Wesentlichen auf den Betrag der Eingangsspannung der Spannungsquelle vergrößert wird. Die Vergrößerung der niedrigen Spannung auf den Betrag der Eingangsspannung bietet den Vorteil, dass ein Austausch einer bereits verbauten elektrischen Komponente in einer Tür, welche direkt durch eine Spannungsquelle energetisch versorgt wird, bei einem nachträglichen Einbau der erfindungsgemäßen Vorrichtung, nicht zu erfolgen braucht. Dies senkt nachhaltig die Kosten für den nachträglichen Einbau der erfindungsgemäßen Vorrichtung für eine Tür. Die erfindungsgemäße Vorrichtung und auch das Verfahren bieten den Vorteil, dass bereits verbaute elektrische Komponenten für eine Tür mit einer bestimmten Betriebsspannung und einem dazu bestimmte abgreifbare Spannung einer Energiequelle weiterhin genutzt werden können, da lediglich zwischen der Energiequelle mit der abgreifbaren Spannung und der elektrischen Komponente die erfindungsgemäße Vorrichtung oder das erfindungsgemäße Verfahren angewendet werden kann. Zudem bietet der Vorteil des Einsatzes eines Superkondensators als Energiespeicher den Vorteil, dass die gesamte Vorrichtung in einer Tür z. B. im Türblatt angeordnet sein kann. Die Vorrichtung kann bei Nutzung von zwei Superkondensatoren als Doppelschichtkondensatoren mit einer Nennspannung von 2,5 Volt auf einer Platine mit den Ausmaßen von beispielsweise 1,7 cm x 8,5 cm angeordnet sein. Bei einer Bauhöhe von ca. 1 cm kann damit die gesamte Vorrichtung in einem Türblatt mit einer Türblattdicke von z. B. 1,5 cm angeordnet werden. Durch die geringen Ausmaße kann auch die gesamte Vorrichtung in einem Türschloss als Baueinheit angeordnet sein. Auch die Anordnung an dem Türschloss ist dabei denkbar.

Weitere Maßnahmen und Vorteile der Erfindungen ergeben sich aus den Ansprüchen der nachfolgenden Beschreibung und den Zeichnungen. Es zeigen:
- Fig. 1: ein Blockschaltbild mit einem Energiespeicher als Superkondensator,
- Fig. 2: ein Blockschaltbild mit einem Abwärtswandler und einem Energiespeicher,
- Fig. 3: ein Blockschaltbild mit einem Abwärtswandler, einer Konstantstromquelle und einem Energiespeicher,
- Fig. 4: ein Blockschaltbild der Vorrichtung mit einem Abwärtswandler, einer Konstantstromquelle, einem Energiespeicher und einem Aufwärtswandler und
- Fig. 5: eine nach dem Aufwärtswandler geschalteten Kaskadeneinheit.

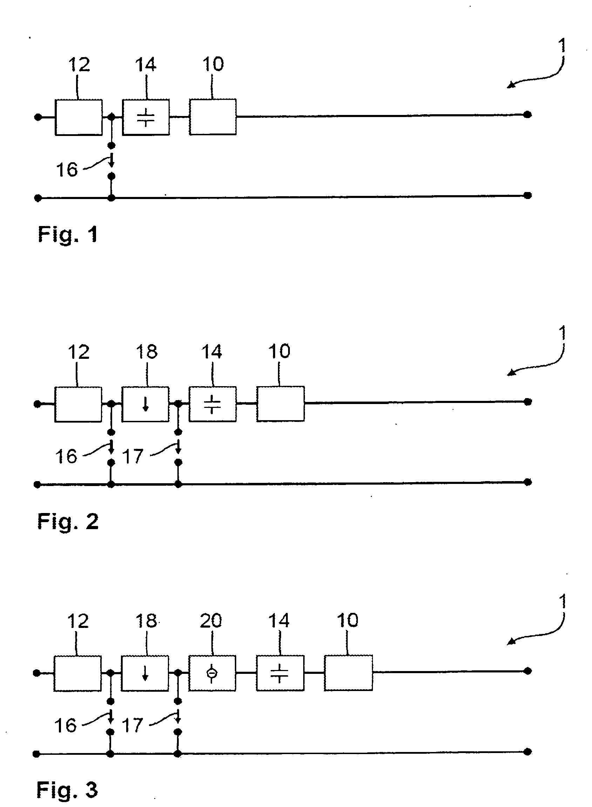

In Figur 1 ist ein Blockschaltbild einer Vorrichtung 1, die nicht Teil der Erfindung ist, dargestellt. Eine Spannungsquelle 12 ist dabei elektrisch an einem Energiespeicher 14, welcher als Superkondensator ausgebildet sein kann, angeschlossen. Die Energie im Energiespeicher 14 erfolgt im Wesentlichen durch eine elektrostatische Energiespeicherung, wobei der Energiespeicher 14 mindestens eine Energiedichte von 1J/cm³ aufweist. An dem Energiespeicher 14 ist eine elektrische Komponente elektrisch verbunden. Über die Spannungsquelle 12 oder den Energiespeicher 14 kann die elektrische Komponente 10 betrieben werden. In einem Normalbetrieb wird über die Spannungsquelle 12 die elektrische Komponente 10 mit elektrischer Energie versorgt. Im Falle eines Ausfalles der Spannungsquelle 12 wird die gespeicherte Energie des Energiespeichers 14 zum Betrieb der elektrischen Komponente 10 genutzt. Im Normalbetrieb kann der Energiespeicher 14 durch die Spannungsquelle12 permanent geladen werden.

In Figur 2 ist ein Blockschaltbild einer Vorrichtung 1, die nicht Teil der Erfindung ist, dargestellt. Die Vorrichtung 1 weist dabei eine Spannungsquelle 12 auf, die mit einem Abwärtswandler 18 elektrisch verbunden ist. An der Spannungsquelle 12 ist eine elektrische Spannung 16 abgreifbar, wobei die elektrische Spannung 16 auf einen Eingang des Abwärtswandlers 18 elektrisch angelegt ist. Durch den Abwärtswandler 18 wird die elektrische Spannung 16 in eine niedrigere Spannung 17 umgewandelt. Durch die niedrigere Spannung 17 kann ein Energiespeicher 14, z. B. ein Superkondensator elektrisch geladen werden. Die niedrigere Spannung 17 kann dabei z. B. 2,5 Volt betragen, wobei der Superkondensator eine Nennspannung von 2,5 Volt aufweisen kann. Dadurch ist die Ladung des Superkondensators 14 möglich. Auch kann die niedrigere Spannung 17 ein Vielfaches der Nennspannung eines Superkondensators 14 aufweisen, wodurch z. B. zwei Superkondensatoren, die in Reihe geschaltet sind, geladen werden können. Die Reihenschaltung von zwei Superkondensatoren mit einer jeweiligen Nennspannung von 2,5 Volt beträgt dementsprechend 5 Volt. Damit kann eine niedrigere Spannung 17 durch den Abwärtswandler 18 auf 5 Volt erfolgen. An dem Eingang des Abwärtswandlers 18 kann eine elektrische Spannung 16 z. B. 24 Volt oder 30 Volt betragen. Natürlich kann auch jeder andere Wert als elektrische Spannung 16 an den Eingang des Abwärtswandlers anliegen. Die in Reihe geschalteten Superkondensatoren können über eine passive Symmetrierschaltung geladen werden. Auch ist es denkbar, dass eine aktive Symmetrierschaltung unter Verwendung von MOSFETs oder ähnliche Bauelemente zur Anwendung kommen kann. Durch ein Anlegen der elektrischen Spannung 16 an den Abwärtswandler 18 wird der Energiespeicher 14 permanent geladen. Im Falle eines Ausfalls der elektrischen Spannung 16 wird die Energie zum Betrieb einer elektrischen Komponente 10 genutzt. In einem Normalbetrieb wird die elektrische Komponente 10 durch die Spannungsquelle 12 betrieben.

In Figur 3 ist schematisch ein Blockschaltbild einer Vorrichtung, die nicht Teil der Erfindung ist, dargestellt, wobei durch eine Spannungsquelle 12 eine elektrische Spannung 16 abgreifbar ist. Die elektrische Spannung 16 wird dabei auf einen Eingang eines Abwärtswandlers 18 geführt, während die elektrische Spannung 16 auf eine niedrigere Spannung 17 umwandelt. Die niedrigere Spannung 17 wird zur Ladung eines Energiespeichers 14, d.h. eines Superkondensator 14 genutzt. An dem Energiespeicher 14 ist eine Konstantstromquelle 20 angeordnet, wodurch eine Begrenzung des Ladestroms erfolgt. Zudem wird der Abwärtswandler 18 durch die Konstantstromquelle 20 nicht überlastet, was vorteilhafterweise einen korrekten Betrieb der Vorrichtung gewährleistet. Eine elektrische Komponente 10 ist dabei durch die Spannungsquelle 12 elektrisch betreibbar. Im Falle, dass die elektrische Spannung 16 ausfällt, wird die gespeicherte elektrische Energie des Energiespeichers 14 zum Betrieb der elektrischen Komponente 10 genutzt. Die elektrische Komponente 10 kann ein elektrischer Türöffner sein, der zwei Schaltzustände einnehmen kann, insbesondere einen Schaltzustand zum Verriegeln der Tür und einen Schaltzustand zum Entriegeln der Tür. Der Schaltzustand des Entriegelns der Tür kann durch die gespeicherte Energie des Energiespeichers 14 erreicht werden.

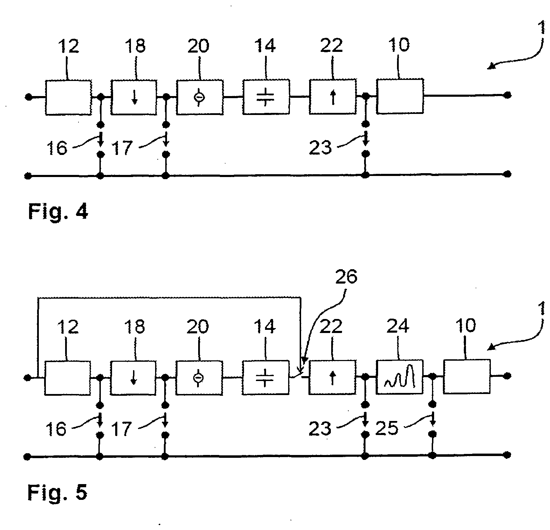

In Figur 4 ist schematisch eine Vorrichtung 1 dargestellt, wodurch eine Spannungsquelle 12 eine elektrische Spannung 16 abgreifbar ist. Die elektrische Spannung 16 wird dabei auf einen Abwärtswandler 18 geführt, wobei durch den Abwärtswandler 18 die elektrische Spannung 16 auf einen niedrigere Spannung 17 umgewandelt wird. An dem Energiespeicher 14 und an dem Abwärtswandler 18 ist eine Konstantstromquelle 20 angeordnet, wobei durch die Konstantstromquelle 20 eine Begrenzung des Ladestroms erfolgt und gleichzeitig der Abwärtswandler 18 nicht überlastet wird, was zu einem korrekten Betrieb der Vorrichtung 1 führt. An dem Energiespeicher 14 ist ein Aufwärtswandler 22 angeordnet, der die elektrische, niedrigere Spannung 17 auf eine höhere Spannung 23 umwandelt. Die höhere Spannung 23 kann dabei die elektrische Spannung 16 sein. Dadurch ist es möglich, bereits verbaute elektrische Komponenten 10 in Türen durch einen Energiespeicher 14 für einen Notbetrieb der elektrischen Komponente 10, insbesondere eines elektrischen Türöffners nachzurüsten, da die Spannungsquelle 12 und der elektrische Türöffner als elektrische Komponente 10 mit ihrer Nennspannung genutzt werden können. Durch den Einsatz eines Abwärtswandlers 18 und einem nachgeschalteten Lademechanismus zur Ladung des Energiespeichers 14 und einem Aufwärtswandler 22 kann einfach und kostengünstig eine Nachrüstung für einen Notbetrieb einer Tür erfolgen.

In Figur 5 ist schematisch eine erfindungsgemäße Vorrichtung 1 dargestellt, wobei durch eine Spannungsquelle 12 eine elektrische Spannung 16 abgreifbar ist. Die elektrische, Spannung 16 wird dabei auf einen Abwärtswandler 18 gelegt, wobei die elektrische Spannung 16 durch den Abwärtswandler 18 in eine niedrigere Spannung 17 umgewandelt wird. Eine Konstantstromquelle 20 ist dabei an elektrisch an dem Abwärtswandler 18 und einem Energiespeicher 14 angeordnet. Der Energiespeicher 14 ist an einem Aufwärtswandler 22 angeordnet, wobei durch den Aufwärtswandler 22 die niedrigere Spannung 17 in eine erste Ausgangsspannung 23 umgewandelt wird. Die erste Ausgangsspannung 23 kann dabei das z. B. zweifache der elektrischen Spannung 16 betragen. Der Aufwärtswandler 22 kann dabei eine einfache Induktivität mit einem guten Wirkungsdraht aufweisen. Zur Erhöhung der ersten Ausgangsspannung 23 ist eine Kaskadenschaltung 24 elektrisch an dem Aufwärtswandler 22 angeordnet.

Durch die Kaskadeneinheit 24 wird die erste Ausgangsspannung 23 auf eine zweite Ausgangsspannung 25 erhöht. Die zweite Ausgangsspannung 25 wird dabei für den Betrieb einer elektrischen Komponente 10 genutzt. Die Kaskadeneinheit kann dabei eine Villard-Schaltung sein. Eine Villard-Schaltung ist dabei kaskadierbar, wobei durch die Nutzung von mehreren Kaskaden eine höhere zweite Ausgangsspannung 25 erzielt werden kann. Der Vorteil einer Villard-Schaltung liegt dabei in der Nutzung von einfachen Dioden und Kondensatoren.

### Bezugszeichenliste

- 10: elektrischer Komponenten
- 12: Spannungsquelle
- 14: Energiespeicher
- 16: elektrische Spannung
- 17: niedrigere Spannung
- 18: Abwärtswandler
- 20: Konstanstromquelle
- 22: Aufwärtswandler
- 23: erste Ausgangsspannung
- 24: Kaskadeneinheit
- 25: zweite Ausgangsspannung
- 26: Schalteinheit

## Patentansprüche

1. Vorrichtung für eine Tür zur elektrischen Versorgung einer elektrischen Komponente (10), wobei die elektrische Komponente (10) durch eine Spannungsquelle (12) zum Entriegeln und zum Verriegeln der Tür elektrisch betreibbar ist und ein Energiespeicher (14) durch eine an der Spannungsquelle (12) abgreifbare elektrische Spannung (16) ladbar ist, wobei bei einem Ausfall der elektrischen Spannung (16) die elektrische Komponente (10) durch den Energiespeicher (14) elektrisch betreibbar ist, wobei die Energie im Energiespeicher (14) im Wesentlichen durch eine elektrostatische Energiespeicherung erfolgt,
**dadurch gekennzeichnet, dass**
der Energiespeicher (14) mindestens eine Energiedichte von 1 J/cm³ aufweist,
ein Abwärtswandler (18) die elektrische Spannung (16) in eine niedrigere Spannung (17) umwandelt, wobei durch die niedrigere Spannung (17) der Energiespeicher (14) ladbar ist,
durch einen Aufwärtsregler (22) eine Erhöhung der niedrigeren Spannung (17) durch den Aufwärtsregler auf eine erste Ausgangsspannung (23) erfolgt
und eine Erhöhung der ersten Ausgangsspannung (23) durch eine Kaskadeneinheit (24) auf eine zweite Ausgangsspannung (25) erfolgt.

2. Vorrichtung gemäß Anspruch 1,
**dadurch gekennzeichnet, dass**
der Energiespeicher (14) bevorzugt eine Energiedichte von mindestens 5 J/cm3 aufweist, besonders bevorzugt eine Energiedichte von mindestens 8 J/cm3 aufweist.

3. Vorrichtung gemäß Anspruch 1 oder 2,
**dadurch gekennzeichnet, dass**
der Energiespeicher (14) ein Superkondensator ist.

4. Vorrichtung gemäß einem der vorherigen Ansprüche,
**dadurch gekennzeichnet, dass**
an dem Energiespeicher (14) eine Konstantstromquelle (20) elektrisch angeordnet ist.

5. Vorrichtung gemäß einem der vorhergehenden Ansprüche,
**dadurch gekennzeichnet, dass**
wenigstens zwei Energiespeicher (14) in Reihe geschaltet sind.

6. Vorrichtung gemäß Anspruch 5,
**dadurch gekennzeichnet, dass**
die Ladung der in Reihe geschalteten Energiespeicher (14) durch eine passive Symmetrierschaltung erfolgt.

7. Vorrichtung gemäß einem der vorhergehenden Ansprüche,
**dadurch gekennzeichnet, dass**
eine Schalteinheit (26) an dem Energiespeicher (14) angeordnet ist, wobei durch die Schalteinheit (26) eine elektrische Energie des Energiespeichers (14) an die elektrische Komponente (10) übertragbar ist.

8. Vorrichtung gemäß einem der vorhergehenden Ansprüche,
**dadurch gekennzeichnet, dass**
die elektrische Komponente (10) ein elektrischer Türöffner ist.

9. Vorrichtung gemäß einem der vorhergehenden Ansprüche,
**dadurch gekennzeichnet, dass**
der Abwärtswandler (18) und/oder der Energiespeicher (14) und/oder der Aufwärtswandler (22) und/oder die Kaskadeneinheit (24) auf einer Platine angeordnet sind, insbesondere auf einer Fläche der Platine in SMD-Technik angeordnet sind.

## Claims

1. A device for a door for the electrical supply of an electrical component (10), wherein the electrical component (10) is electrically operable by means of a voltage source (12) for unlocking and for interlocking the door, and an energy accumulator (14) is chargeable by means of an electrical voltage (16), which may be picked up at the voltage source (12), wherein, during a failure of the electrical voltage (16), the electrical component (10) is electrically operable by means of the energy accumulator (14), wherein the energy in the energy accumulator (14) is essentially realized by means of electrostatic energy accumulation,
**characterized in that**
the energy accumulator (14) has an energy density of at least 1 J/cm³,
a down-converter (18) converts the electrical voltage (16) to a lower voltage (17), wherein the energy accumulator (14) is chargeable by means of the lower voltage (17),
by means of an up-regulator (22) an increase of the lower voltage (17) to a first output voltage (23) is realized by means of the up-regulator,
and an increase of the first output voltage (23) to a second output voltage (25) is realized by means of a cascade unit (24).

2. The device according to claim 1,
**characterized in that**
the energy accumulator (14) preferably includes an energy density of at least 5 J/cm³, in particular includes preferably an energy density of at least 8 J/cm³.

3. The device according to claim 1 or 2, **characterized in that**
the energy accumulator (14) is a supercapcitor.

4. The device according to any of the preceding claims,
**characterized in that**
a constant current source (20) is electrically disposed at the energy accumulator (14).

5. The device according to any of the preceding claims,
**characterized in that**
at least two energy accumulators (14) are connected in series.

6. The device according to claim 5,
**characterized in that**
the charge of the energy accumulators (14) connected in series is realized by means of a passive symmetrical connection.

7. The device according to any of the preceding claims,
**characterized in that**
a switch unit (26) is disposed at the energy accumulator (14), wherein an electrical energy of the energy accumulator (14) is transferrable to the electrical component (10) by means of the switch unit (26).

8. The device according to any of the preceding claims,
**characterized in that**
the electrical component (10) is an electrical door opener.

9. The device according to any of the preceding claims,
**characterized in that**
the down-converter (18) and/or the energy accumulator (14) and/or the up-converter (22) and/or the cascade unit (24) are/is disposed on a printed circuit board, in particular are/is disposed on a surface of the printed circuit board in an SMD technique.

## Revendications

1. Dispositif pour une porte pour l'approvisionnement électrique d'un composant électrique (10), le composant électrique (10) pouvant être opéré électriquement par l'intermédiaire d'une source de tension (12) pour déverrouiller et pour verrouiller la porte, et un accumulateur d'énergie (14) pouvant être chargé par l'intermédiaire d'une tension électrique (16) pouvant être prélevée à la source de tension (12), lors d'une défaillance de la tension électrique (16), le composant électrique (10) pouvant être opéré électriquement par l'intermédiaire de l'accumulateur d'énergie (14), l'énergie dans l'accumulateur d'énergie (14) étant réalisée essentiellement par l'intermédiaire d'une accumulation d'énergie électrostatique,
**caractérisé en ce que**
l'accumulateur d'énergie (14) présente au moins une densité d'énergie de 1 J/cm³,
un convertisseur abaisseur (18) convertit la tension électrique (16) en une tension plus basse (17), l'accumulateur d'énergie (14) pouvant être chargé par la tension plus basse (17),
par l'intermédiaire d'un régulateur survolteur (22), une augmentation de la tension plus basse (17) se fait par le régulateur survolteur à une première tension de sortie (23),
et une augmentation de la première tension de sortie (23) à une deuxième tension de sortie (25) se fait par l'intermédiaire d'une unité en cascades (24).

2. Dispositif selon la revendication 1,
**caractérisé en ce que**
l'accumulateur d'énergie (14) présente de préférence une densité d'énergie au moins d'e5 J/cm³, tout particulièrement une densité d'énergie au moins de 8 J/cm³.

3. Dispositif selon la revendication 1 ou 2, **caractérisé en ce que**
l'accumulateur d'énergie (14) est un supercondensateur.

4. Dispositif selon l'une des revendications précédentes,
**caractérisé en ce qu'**
une source de courant constant (20) est agencée électriquement sur l'accumulateur d'énergie (14).

5. Dispositif selon l'une des revendications précédentes,
**caractérisé en ce qu'**
au moins deux accumulateurs d'énergie (14) sont couplés en série.

6. Dispositif selon la revendication 5,
**caractérisé en ce que**
le chargement des accumulateurs d'énergie (14) couplés en série se fait par l'intermédiaire d'un couplage symétrique passif.

7. Dispositif selon l'une des revendications précédentes,
**caractérisé en ce qu'**
une unité de commutation (26) est agencée sur l'accumulateur d'énergie (14), une énergie électrique de l'accumulateur d'énergie (14) pouvant être transférée vers le composant électrique (10) par l'intermédiaire de l'unité de commutation (26).

8. Dispositif selon l'une des revendications précédentes,
**caractérisé en ce que**
le composant électrique (10) est un ouvre-porte électrique.

9. Dispositif selon l'une des revendications précédentes,
**caractérisé en ce que**
le convertisseur abaisseur (18) et/ou l'accumulateur d'énergie (14) et/ou le convertisseur élévateur (22) et/ou l'unité en cascades (24) sont agencés sur une platine, sont tout particulièrement agencés en technologie des montages en surface (Surface Mount Technology, SMD) sur une surface de la platine.
